(19)

Europäisches Patentamt

European Patent Office

Office européen des brevets

(11) **EP 4 481 583 A1**

(12) **EUROPEAN PATENT APPLICATION**
published in accordance with Art. 153(4) EPC

(43) Date of publication:
25.12.2024 Bulletin 2024/52

(21) Application number: 23755682.4

(22) Date of filing: 31.01.2023

(51) International Patent Classification (IPC):
G06F 16/33 (2019.01)    G06F 9/451 (2018.01)
G06F 16/332 (2019.01)    G06F 40/30 (2020.01)

(86) International application number:
PCT/CN2023/073922

(87) International publication number:
WO 2023/155678 (24.08.2023 Gazette 2023/34)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 17.02.2022 CN 202210151466

(71) Applicants:
• Beijing Wodong Tianjun Information Technology Co.,
Ltd.
Beijing 100176 (CN)
• Beijing Jingdong Century Trading Co., Ltd.
Beijing 100176 (CN)

(72) Inventors:
• ZHANG, Hainan
Beijing 100176 (CN)
• ZOU, Yanyan
Beijing 100176 (CN)
• CHEN, Hongshen
Beijing 100176 (CN)
• DING, Zhuoye
Beijing 100176 (CN)
• LONG, Bo
Beijing 100176 (CN)

(74) Representative: Müller-Boré & Partner
Patentanwälte PartG mbB
Friedenheimer Brücke 21
80639 München (DE)

(54) **METHOD AND APPARATUS FOR DETERMINING INFORMATION**

(57) The present application relates to the technical field of computers. Disclosed are a method and apparatus for determining information. The method comprises: acquiring overall preceding text information and a plurality of pieces of candidate reply information for replying to the overall preceding text information; for each of the plurality of pieces of candidate reply information, determining total difference information between the candidate reply information and candidate reply information of the plurality of pieces of candidate reply information other than the candidate reply information; determining consistency information between the total difference information and the overall preceding text information as first consistency information between the candidate reply information and the overall preceding text information; and according to the first consistency information corresponding to each piece of candidate reply information, determining target reply information from among the plurality of pieces of candidate reply information.

200

FIG. 2

**Description**

This application claims the priority and rights to Chinese Patent Application No. 202210151466.6 filed with the China National Intellectual Property Administration (CNIPA) on February 17, 2022 and entitled "method and apparatus for determining information", the contents of which are hereby incorporated by reference in their entirety.

TECHNICAL FIELD

The present disclosure relates to the field of computer technology, and in particular, to a method and apparatus for determining information.

BACKGROUND

With the development of AI technology, AI models have been adopted in more and more fields to implement human-machine dialogue systems, such as intelligent customer service systems, intelligent chat systems, and self-service question-and-answer systems. Existing human-machine dialogue systems usually determine reply/return information based on semantics of whole preceding information in historical dialogues.

However, a method for determining reply/return information based on semantics of overall preceding information suffers from inaccurate determination of the information.

SUMMARY

Embodiments of the present disclosure provides a method and apparatus for determining information, an electronic device, a computer readable storage medium, and a computer program product.

Some embodiments of the present disclosure provide a method for determining information, including: acquiring whole preceding text information and a plurality pieces of candidate reply information for replying to the whole preceding text information; determining, for each of the plurality pieces of candidate reply information, total difference information between the candidate reply information and other candidate reply information of the plurality pieces of candidate reply information other than the candidate reply information; determining consistency information between the total difference information and the whole preceding text information as first consistency information between the candidate reply information and the whole preceding text information; and determining target reply information from among the plurality pieces of candidate reply information, based on the first consistency information corresponding to each piece of candidate reply information.

Some embodiments of the present disclosure provide an apparatus for determining information, including: an acquisition unit, configured to acquire whole preceding text information and a plurality pieces of candidate reply information for replying to the whole preceding text information; a first determining unit, configured to determine, for each of the plurality pieces of candidate reply information, total difference information between the candidate reply information and other candidate reply information of the plurality pieces of candidate reply information other than the candidate reply information; a second determining unit, configured to determine consistency information between the total difference information and the whole preceding text information as first consistency information between the candidate reply information and the whole preceding text information; and a third determining unit, configured to determine target reply information from among the plurality pieces of candidate reply information, based on the first consistency information corresponding to each piece of candidate reply information.

Some embodiments of the present disclosure provide an electronic device, including: one or more processors; a storage apparatus, for storing one or more programs, the one or more programs, when executed by the one or more processors, cause the one or more processors to implement the method for determining information as provided in the first aspect.

Some embodiments of the present disclosure provide a computer readable storage medium, storing a computer program thereon, the program, when executed by a processor, implements any embodiment of the method for determining information as described above.

Some embodiments of the present disclosure provide a computer program product, including a computer program, the program, when executed by a processor, implements any embodiment of the method for determining information as described above.

It should be understood that the content described in this section is not intended to identify critical or important features of embodiments of the present disclosure, and is not used to limit the scope of the present disclosure. Other features of the present disclosure will become readily comprehensible through the following description.

BRIEF DESCRIPTION OF THE DRAWINGS

The accompanying drawings are used for better understanding of this solution, and do not constitute a limitation to the present disclosure. In which:

FIG. 1 is an example system architecture in which an embodiment of the present disclosure may be applied;

FIG. 2 is a flowchart of a method for determining information according to an embodiment of the present disclosure;

FIG. 3 is a flowchart of a method for determining information according to another embodiment of the present disclosure;

FIG. 4 is a flowchart of an application scenario of the method for determining information according to an embodiment of the present disclosure;

FIG. 5 is a schematic diagram of a training apparatus for a model used in an application scenario in the method for determining information according to an embodiment of the present disclosure;

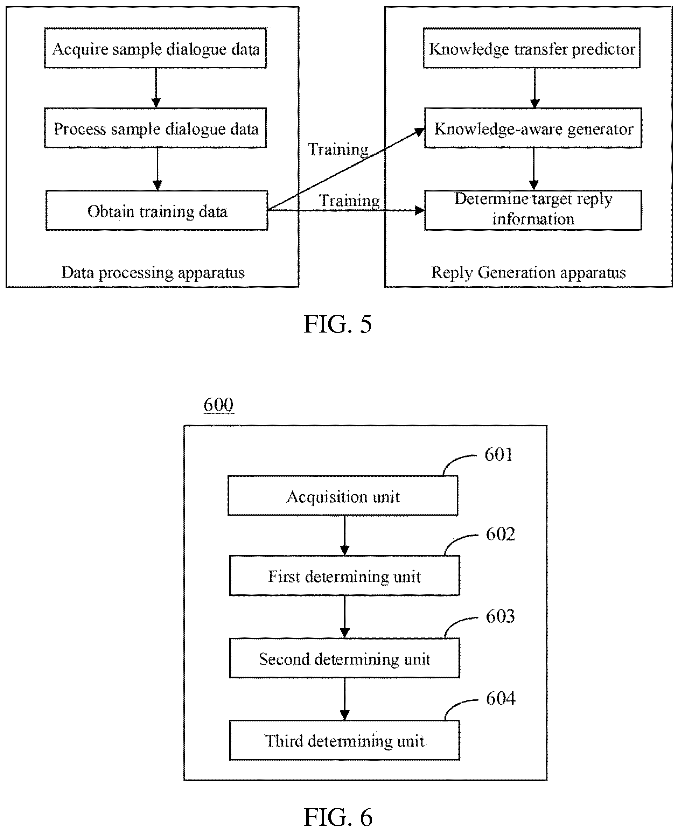

FIG. 5 is a schematic structural diagram of an apparatus for determining information according to an embodiment of the present disclosure; and

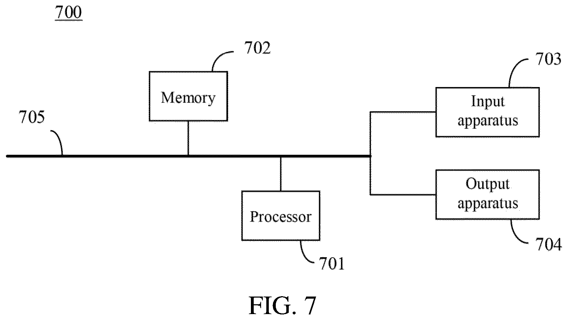

FIG. 7 is a block diagram of an electronic device used to implement the method for determining information of embodiments of the present disclosure.

DETAILED DESCRIPTION OF EMBODIMENTS

Exemplary embodiments of the present disclosure are described below in combination with the accompanying drawings, and various details of embodiments of the present disclosure are included in the description to facilitate understanding, and should be considered as exemplary only. Accordingly, it should be recognized by one of ordinary skill in the art that various changes and modifications may be made to the embodiments described herein without departing from the scope and spirit of the present disclosure. Also, for clarity and conciseness, descriptions for well-known functions and structures are omitted in the following description.

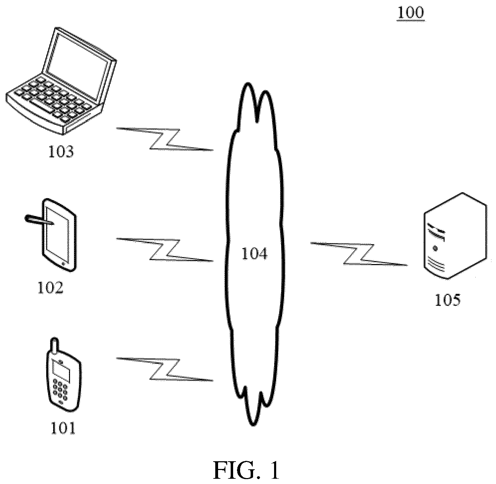

FIG. 1 illustrates an example system architecture 100 in which a method for determining information or an apparatus for determining information according to an embodiment of the present disclosure may be applied.

As shown in FIG. 1, the system architecture 100 may include terminal device(s) 101, 102, 103, a network 104, and a server 105. The network 104 serves as a medium providing a communication link between the terminal device(s) 101, 102, 103 and the server 105. The network 104 may include various types of connections, for example, wired or wireless communication links, or optical fiber cables.

A user may use the terminal device(s) 101, 102, 103 to interact with the server 105 via the network 104, to receive or send messages, etc. The terminal device(s) 101, 102, 103 may be user terminal devices on which various client applications may be installed, such as an image-based application, a video-based application, a shopping-based application, a chat-based application, a search-based application, or a financial application.

The terminal device(s) 101, 102, 103 may be various electronic devices having a display screen and supporting receiving messages from the server, including, but not limited to, a smartphone, a tablet, an e-book reader, an e-player, a laptop and a desktop computer.

The terminal device(s) 101, 102, 103 may be hardware or software. When being the hardware, the terminal device(s) 101, 102, 103 may be various electronic devices, when being the software, the terminal device(s) 101, 102, 103 may be installed in the above electronic devices. The terminal devices may be implemented as a plurality pieces of software or a plurality of software modules (e.g., a plurality of software modules used to provide distributed services), or may be implemented as a single piece of software or a single software module, which will not be limited herein.

The server 105 may acquire whole preceding text information and a plurality pieces of candidate reply information for replying to the whole preceding text information, then determine, for each piece of candidate reply information in the plurality pieces of candidate reply information, total difference information between the piece of candidate reply information and the plurality pieces of candidate reply information, determine consistency information between the total difference information and the whole preceding text information as first consistency information between the piece of candidate reply information and the whole preceding text information, and determine target reply information from the plurality pieces of candidate reply information, based on the first consistency information corresponding to each piece of candidate reply information.

It should be noted that the method for determining information provided in embodiments of the present disclosure may be performed by the server 105, correspondingly, the apparatus for determining information may be provided in the server 105.

It should be appreciated that the numbers of the terminal devices, the networks and the servers in FIG. 1 are merely illustrative. Any number of terminal devices, networks and servers may be provided depending on implementation needs.

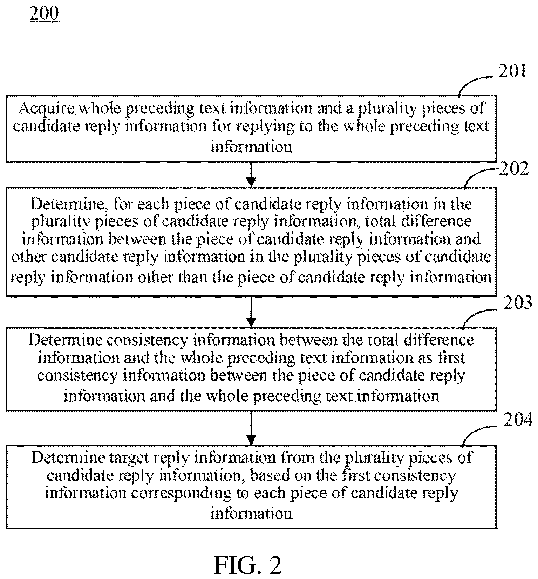

With further reference to FIG. 2, a flowchart 200 of a method for determining information according to an embodiment of the present disclosure is shown, including the following steps:

Step 201, acquiring whole preceding text information and a plurality pieces of candidate reply information for replying to the whole preceding text information.

In the present embodiment, an executing body (e.g., the server 105 shown in FIG. 1) of the method for determining information may acquire the whole preceding text information and the plurality pieces of candidate reply information for replying to the whole preceding text information. Here, the whole preceding text information refers to historical information in a dialogue, such as historical question-and-answer messages in an intelligent customer service system, or a historical dialogue record in an intelligent chat system. The reply information refers to reply information used to reply to the last piece of information, or all pieces of information, in the whole preceding text information.

Step 202, determining, for each piece of candidate reply information in the plurality pieces of candidate reply information, total difference information between the piece of candidate reply information and other candidate reply information in the plurality pieces of candidate reply information other than the piece of candidate reply information.

In the present embodiment, for each piece of candidate reply information in the plurality pieces of candidate reply information, the total difference information between the piece of candidate reply information and the other candidate reply information of the plurality pieces of candidate reply information other than the candidate reply information may be determined. For example, if candidate reply information A is "It is a sunny day today", candidate reply information B is "It is a sunny day with moderate humidity", candidate reply information C is "It is a sunny day, suitable for travelling", candidate reply information D is "It is a sunny day, suitable for travelling, suitable for hiking", then the total difference information between the candidate reply information D and the rest candidate reply information in the plurality pieces of candidate reply information other than the candidate reply information is "suitable for travelling, suitable for hiking".

Step 203, determining consistency information between the total difference information and the whole preceding text information as first consistency information between the piece of candidate reply information and the whole preceding text information.

In the present embodiment, consistency information between the piece of candidate reply information and the whole preceding text information may be determined based on the total difference information between the piece of candidate reply information and the other candidate reply information other than the candidate reply information. For ease of differentiation, this consistency information may be referred to as the first consistency information, which is used to represent the degree of logical consistency/degree of similarity between the content expressed in the total difference information and the content expressed in the whole preceding text information, or used to represent the degree of logical consistency/degree of similarity between the syntax/semantics of the total difference information and the syntax/semantics of the whole preceding text information, etc.

Step 204, determining target reply information from the plurality pieces of candidate reply information, based on the first consistency information corresponding to each piece of candidate reply information.

In the present embodiment, the target reply information may be determined from the plurality pieces of candidate reply information, based on the first consistency information corresponding to each piece of candidate reply information. Here, the first consistency information corresponding to any one piece of reply information refers to: the consistency information between the total difference information (i.e., the total different information between this any one piece of candidate reply information and the rest candidate reply information) and the whole preceding text information.

The present embodiment provides a method for determining information, by acquiring whole preceding text information and a plurality pieces of candidate reply information for replying to the whole preceding text information; determining, for each piece of candidate reply information in the plurality pieces of candidate reply information, total difference information between the piece of candidate reply information and other candidate reply information in the plurality pieces of candidate reply information other than the candidate reply information; determining consistency information between the total difference information and the whole preceding text information as first consistency information between the piece of candidate reply information and the whole preceding text information; and determining target reply information from the plurality pieces of candidate reply information, based on the first consistency information corresponding to each piece of candidate reply information, the method may enhance the logical consistency and content consistency of the determined target reply information with the whole preceding text information in the historical dialogue record, thereby improving an accuracy of the pushed information.

Alternatively, the determining, for each piece of candidate reply information in the plurality pieces of candidate reply information, total difference information between the piece of candidate reply information and other candidate reply information in the plurality pieces of candidate reply information other than the candidate reply information, includes: acquiring word vectors of each piece of candidate reply information; for each piece of candidate reply information, determining, based on a similarity between the word vectors of the candidate reply information and the word vectors of each piece of the other candidate reply information, difference information between the piece of candidate reply information and each piece of other candidate reply information; and determining the difference information between the piece of candidate reply information and all of the other candidate reply information as the total difference information between the piece of candidate reply information and the other candidate reply information.

In the present embodiment, the word vectors of each piece of candidate reply information may be acquired based on a pre-trained semantic parsing model, or a pre-trained linguistic representation model, or the like, so as to determine, for each piece of candidate reply information, based on the similarity between the word vectors of the piece of candidate reply information and the word vectors of each piece of the other candidate reply information in the plurality pieces of candidate reply information, the difference information between the piece of candidate reply information and each piece of candidate reply information. Here, the difference information may be difference content between the semantics expressed by the two pieces of information, or difference information between the logics expressed by the two pieces of information. Then, the difference information between the piece of candidate reply information and each piece of the other candidate reply information may be aggregated/gathered to obtain the total difference information between the piece of candidate reply information and all pieces of the other candidate reply information, i.e., the total difference information between the piece of candidate reply information and the other candidate reply information in the plurality pieces of candidate reply information other than the candidate reply information.

In the present embodiment, the difference information between pieces of candidate reply information is determined based on the similarity between the word vectors of the pieces of candidate reply information, which may improve an accuracy as well as an efficiency of determining the difference information.

Alternatively, the determining consistency information between the total difference information and the whole preceding text information as first consistency information between the piece of candidate reply information and the whole preceding text information, includes: acquiring word vectors of the whole preceding text information; and determining consistency information between the total difference information and the word vectors of the whole preceding text information as the first consistency information between the piece of candidate reply information and the whole preceding text information.

In the present embodiment, the word vectors of the whole preceding text information may be acquired based on a pre-trained semantic parsing model, or a pre-trained linguistic representation model, or the like, then the first consistency information between the piece of candidate reply information and the whole preceding text information may be determined based on the word vectors of the whole preceding text information as well as the total difference information between the piece of candidate reply information and the other candidate reply information. It may be understood that since the total difference information is determined based on differences between the word vectors of the piece pf candidate reply information, a data format of the total difference information is in the form of word vector, and based on the word vectors of the whole preceding text information and the total difference information, a consistency comparison, i.e., similarity/homogeneity comparison, may be directly performed to obtain the consistency information between the piece of candidate information and the whole preceding text information.

In the present embodiment, the first consistency information between the piece of candidate reply information and the whole preceding text information is determined based on the word vectors of the whole preceding text information and the total difference information, which may improve an accuracy as well as an efficiency of determining the first consistency information.

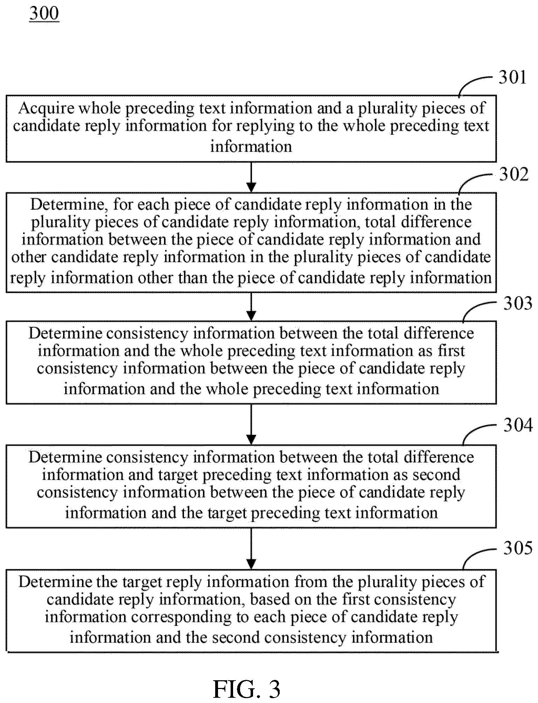

With further reference to FIG. 3, a flowchart 300 of the method for determining information according to another embodiment of the present disclosure is shown, including the following steps.

Step 301, acquiring whole preceding text information and a plurality pieces of candidate reply information for replying to the whole preceding text information.

Step 302, determining, for each piece of candidate reply information in the plurality pieces of candidate reply information, total difference information between the piece of candidate reply information and other candidate reply information in the plurality pieces of candidate reply information other than the piece of candidate reply information.

Step 303, determining consistency information between the total difference information and the whole preceding text information as first consistency information between the piece of candidate reply information and the whole preceding text information.

In the present embodiment, description of step 301, step 302, and step 303 is consistent with the description of step 201, step 202, and step 203, and detailed description thereof will be omitted.

Step 304, determining consistency information between the total difference information and target preceding text information as second consistency information between the piece of candidate reply information and the target preceding text information, where, the target preceding text information is information in the whole preceding text information that belongs to a same interlocutor as the piece of candidate reply information.

In the present embodiment, the consistency information between the total difference information and the target preceding text information may be determined as consistency information between the piece of candidate reply information and the target preceding text information, which may be referred to as the second consistency information, for ease of differentiation. This consistency information is used to represent the logical consistency between the content expressed in the total difference information and the content expressed in the target whole preceding text information, or used to represent the logical consistency between the syntax/semantics of the total difference information and the syntax/semantics of the target whole preceding text information, etc. The target preceding text information refers to: a dialogue record generated by the interlocutor of the piece of candidate reply information in the whole preceding text information. For example, the whole preceding text information is a dialogue between two parties A and B (where A may be a human user who asks question(s) and B may be a robot customer service for replying to the user's question(s)), and if the current dialogue process is at a stage where B needs to reply, i.e., currently, a message needs to be generated by B, then the interlocutor of the piece of candidate reply information is B. Therefore, the target preceding text information is all information from B in the whole preceding text information.

Step 305, determining the target reply information from the plurality pieces of candidate reply information, based on the first consistency information and the second consistency information corresponding to each piece of candidate reply information.

In the present embodiment, the target reply information may be determined from the plurality pieces of candidate reply information, based on the first consistency information and the second consistency information corresponding to each piece of candidate reply information. Here, the first consistency information corresponding to any one piece of reply information refers to: the consistency information between the total difference information (i.e., the total difference information between this any one piece of candidate reply information and the other candidate reply information) and the whole preceding text information; and the second consistency information corresponding to any one piece of reply information refers to: the consistency information between the total difference information (i.e., the total difference information between this any one piece of candidate reply information and the other candidate reply information) and the target preceding text information.

The method for determining information provided in embodiments of the present embodiment, compared to the method described in the embodiment of FIG. 2, adds the step of acquiring second consistency information between the piece of candidate reply information and the target preceding text information, as well as determining the target reply information also basing on the second consistency information, may enhance the logical consistency and content consistency between the determined candidate reply information and the target preceding text information in the historical dialogue record, that is, enhance the consistency of information provided by the interlocutor of the candidate reply information, thereby improving an accuracy of determining the reply information.

Alternatively, the total difference information is determined based on the similarity between the word vectors of the piece of candidate reply information and the word vectors of the other candidate reply information in the plurality pieces of candidate reply information other than the piece of candidate reply information, the determining consistency information between the total difference information and target preceding text information as second consistency information between the piece of candidate reply information and the target preceding text information, includes: acquiring word vectors of the target preceding text information; and determining consistency information between the total difference information and the word vectors of the target preceding text information as the second consistency information between the piece of candidate reply information and the target preceding text information.

In the present embodiment, the word vectors of the target preceding text information may be acquired based on a pre-trained semantic parsing model, or a pre-trained linguistic representation model, or the like, then the second consistency information between the piece of candidate reply information and the target preceding text information may be determined based on the word vectors of the target preceding text information as well as the total difference information between the piece of candidate reply information and the other candidate reply information. It may be understood that since the total difference information is determined based on differences between the word vectors of the candidate reply information and the word vectors of the other candidate reply information, a data format of the total difference information is in the form of word vector. Consistency comparison, i.e., similarity/homogeneity comparison, may be directly performed on the word vectors of the target preceding text information and the total difference information, to obtain the consistency information between the piece of candidate information and the target preceding text information.

In the present embodiment, the second consistency information between the piece of candidate reply information and the whole preceding text information is determined based on the word vectors of the target preceding text information and the total difference information, which may improve an accuracy as well as an efficiency of determining the second consistency information.

Alternatively, the determining the target reply information from the plurality pieces of candidate reply information, based on the first consistency information and the second consistency information corresponding to each piece of candidate reply information, includes: for each piece of candidate reply information, determining a score of the piece of candidate reply information, on basis of the first consistency information corresponding to the piece of candidate reply information, the second consistency information corresponding to the piece of candidate reply information, and third consistency information between semantics of the piece of candidate reply information and semantics of the whole preceding text information; and determining the target reply information from the plurality pieces of candidate reply information, based on score of each piece of candidate reply information.

In the present embodiment, for each piece of candidate reply information, the first consistency information corresponding to the piece of candidate reply information, the second consistency information corresponding to the piece of candidate reply information, and the third consistency information between the semantics of the piece of candidate reply information and the semantics of the whole preceding text information may be used, to determine the score of the piece of candidate reply information. In particular, the score of the piece of candidate reply information is made positively proportional to a preceding text semantic relevance (the preceding text semantic relevance refers to: the degree of relevance/degree of consistency between the semantics of the piece of candidate reply information and the semantics of the whole preceding text information), positively proportional to the first consistency information (the higher the degree of first consistency, the higher the score of the piece of candidate reply information), and positively proportional to the second consistency information (the higher the degree of second consistency, the higher the score of the piece of candidate reply information). After determining the score of each piece of the candidate reply information, a piece of candidate reply information having the highest score therein is determined as the target reply information.

In the present embodiment, the piece of candidate reply information, which has a greater preceding text semantic relevance, a higher degree of first consistency, and a higher degree of second consistency, is determined as the target reply information, and thus the accuracy of determining the target reply information may be improved.

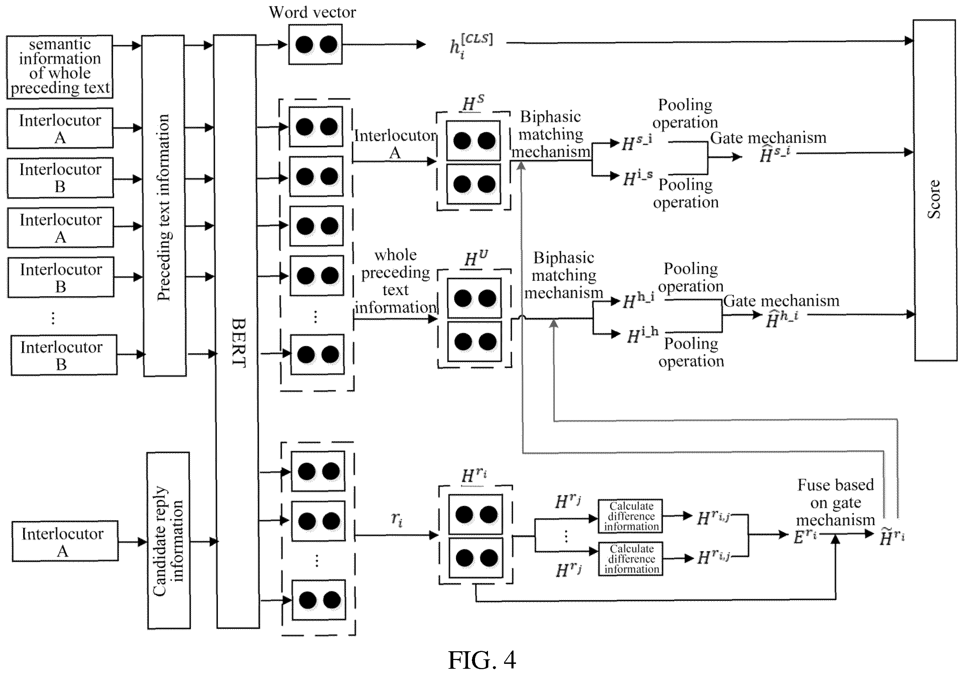

In some application scenarios, as shown in FIG. 4, the method for determining information includes:

In the first step, inputting historical dialogue/whole preceding text information and a plurality pieces of candidate reply information for replying to the whole preceding text information into a BERT (Bidirectional Encoder Representations from Transformer) model, to obtain word vectors of the whole preceding text information and word vectors of each piece of candidate reply information in the plurality pieces of candidate reply information output from the BERT model.

In particular, the above step includes: acquiring $(U;r_i)$, where $U = \{u_1,...,u_N\}$ represents the whole preceding text information, $u_i = \left\{ w_{i,1}^{u}, ..., w_{i,N}^{u} \right\}$ represents an i-th sentence in the preceding text information, $w_{i,N}^{u}$ represents an N-th word in the i-th sentence in the whole preceding text information, $r_i = \{ w_{i,1}^{r}, ..., w_{i,N}^{r} \}$ represents the i-th candidate reply information, and $w_{i,N}^{r}$ represents the N-th word in the i-th candidate reply information; the whole preceding text information U and each piece of candidate reply information $r_i$ are concatenated and then input into a pre-trained BERT model, and the word vectors of the whole preceding text information and the word vectors of the candidate reply information output from the BERT model are obtained:

$$\left[ H^U; H^{r^i} \right] = BERT(< U; r_i >)$$

where, BERT($\cdot$) returns output from the last layer of the BERT model. $< ; >$ represents concatenation/splicing of the two sequences preceding and succeeding the semicolon, $H^U$ represents the word vectors of the whole preceding text information U, and $H^{r_i}$ represents the word vector of the candidate reply information $r_i$. In addition, a total vector $h_i^{[CLS]}$ of semantic information of the whole preceding text information may be obtained based on the BERT model.

In the second step, after obtaining the word vectors of the whole preceding text information and the word vectors of the piece of candidate reply information, performing fine-grained reply comparison based on the two.

In particular, the step includes: first, for each piece of candidate reply information, calculating a word-level attention between the word vectors $H^U$ of the whole preceding text information and the word vectors $H^{r_i}$ of the piece of candidate reply information, and obtaining a similarity matrix between the two:

$$A^{r_{i,j}} = \left[ \frac{\exp\left( a_{mn}^{r_{i,j}} \right)}{\sum_n \exp\left( a_{mn}^{r_{i,j}} \right)} \right]$$

$$a_{mn}^{r_{i,j}} = W_1^T [H_m^{r_i}; H_n^{r_j}; H_m^{r_i} \odot H_n^{r_j}]$$

where, $\qquad$ where, $\odot$ represents elementwise multiplication between the two matrices. $H_m^{r_i}$ is the vector representation of an m-th word in $r_i$, and $W_1^T$ is a model parameter. $a_{mn}^{r_{i,j}}$ represents the similarity between the m-th word in $r_i$ and the n-th word in $r_j$.

Secondly, based on the above similarity matrix $A^{r_{i,j}}$, obtaining the difference information between $r_i$ and $r_j$, and comparison information between $r_i$ and $r_j$ is defined as:

$$H^{r_{i,j}} = [H^{r_i} - \overline{H}^{r_{i,j}}; H^{r_i} \odot \overline{H}^{r_{i,j}}]$$

$$\overline{H}^{r_{i,j}} = A^{r_{i,j}} H^{r_j}$$

where, $\overline{H}^{r_{i,j}}$ represents a similar part between $r_i$ and $r_j$, and $H^{r_{i,j}}$ represents a different part between $r_i$ and $r_j$, i.e., the difference information between $r_i$ and $r_j$.

Finally, after acquiring the difference information between the current $r_i$ and each $r_j$ in the plurality pieces of candidate reply information, combining the above difference information to obtain a differentiated representation $\tilde{H}^{r_i}$ between $r_i$ and all pieces of the rest candidate reply information, i.e., the total difference information:

$$E^{r_i} = \tanh\big([\{H^{r_{i,j}}\}_{j \neq i}]W_2 + b_2\big)$$

$$g^{r_i} = \sigma([E^{r_i}; H^{r_i}]W_3 + b_3)$$

$$\tilde{H}^{r_i} = g^{r_i} \odot E^{r_i} + (1 - g^{r_i}) \odot H^{r_i}$$

where, $E^{r_i}$ is an intermediate variable of the computational equation; [·] represents a splicing operation, i.e., splicing sequences in [ ]; $\sigma(\cdot)$ represents the Dirac $\delta$ function; and $W_2$, $W_3$ and $b_2$ represent model parameters.

In the third step, performing logical consistency reasoning on the whole preceding text: based on the differentiated representation $\tilde{H}^{r_i}$ between $r_i$ and all of the rest candidate reply information, determining the consistency information $\hat{H}^{h\_i}$ (i.e., the first consistency information mentioned above) between the candidate reply information $r_i$ and the whole preceding text information (specifically, the word vector $H^U$).

In particular, the above step including:

$$A^{h\_i} = \text{SoftMax}(H^U W_4 \tilde{H}^{r_i{}^T})$$

$$A^{i\_h} = \text{SoftMax}(\tilde{H}^{r_i} W_5 H^{U^T})$$

$$H^{h\_i} = \text{Relu}(A^{h\_i} \tilde{H}^{r_i} W_6)$$

$$H^{i\_h} = \text{Relu}(A^{i\_h} H^U W_7)$$

$$E^{h\_i} = \text{MaxPolling}(H^{h\_i})$$

$$E^{i\_h} = \text{MaxPolling}(H^{i\_h})$$

$$g^{hi} = \sigma(E^{h\_i} W_8 + E^{i\_h} W_9 + b_4)$$

$$\widehat{H}^{h\_i} = g^{hi}\odot E^{\text{h\_i}} + (1 - g^{hi})\odot E^{\text{i\_h}}$$

where, $W_4$, $W_5$, $W_6$, $W_7$, $W_8$, $W_9$, $b_4$ are model parameters; $A^{h\_i}$ and $A^{i\_h}$ are word-level attention matrices between the whole preceding text information U and the candidate reply information $r_i$, which focus on different perspectives, i.e., attention models used to obtain the two types of data focus on different information; the attention model used to obtain $A^{h\_i}$ focuses on the whole preceding text information related to the reply information, and the attention model used to obtain $A^{i\_h}$ focuses on the reply information related to the whole preceding text information. MaxPooling denotes a maximum pooling operation, SoftMax($\cdot$) denotes a normalized exponential function, and Relu(-) denotes a linear rectification function; $H^{h\_i}$ is a reply-aware preceding text representation, and $H^{i\_h}$ is a preceding-text-aware reply representation; and $g^{hi}$ denotes a gate mechanism value obtained by fusing $H^{h\_i}$ and $H^{i\_h}$ based on the gate mechanism.

In the fourth step: enhancing consistency of overall information of the interlocutor: determining the consistency information $\hat{H}^{s\_i}$ (i.e., the second consistency information mentioned above) between the candidate reply information $r_i$ and the target preceding text information (specifically, the word vector $H^S$), based on the differentiated representation $\tilde{H}^{ri}$ between $r_i$ and all of the other candidate reply information, where, the target preceding text information refers to the whole preceding text information given by the interlocutor to which the piece of candidate reply information belongs (e.g., if the piece of candidate reply information is dialogue information to be output by user A, the target preceding text information is all information sent by user A in the whole preceding text information).

$$A^{s\_i}=\text{SoftMax}(H^S W_{10}\tilde{H}^{r_i{}^T})$$

$$A^{i\_s}=\text{SoftMax}(\tilde{H}^{r_i} W_{11} H^{U^T})$$

$$H^{s\_i}=\text{Relu}(A^{h\_i}\tilde{H}^{r_i} W_{12})$$

$$H^{i\_s}=\text{Relu}(A^{i\_h} H^U W_{13})$$

where, $A^{s\_i}$ and $A^{i\_s}$ are word-level attention matrices between the target preceding text information (i.e., the interlocutor's own whole preceding text information) and the candidate reply information $r_i$, which focus on different perspectives, i.e., attention models used to obtain the two types of data focus on different information; the attention model used to obtain $A^{s\_i}$ focuses on the target preceding text information, and the attention model used to obtain $A^{i\_s}$ focuses on the reply information (answer information) related to the target preceding text information; mark T denotes transpose of the matrix; $H^{s\_i}$ denotes a reply-aware speaker representation, is the vector representation of the whole preceding text information, and this vector representation is related to the reply information; $H^{i\_s}$ represents a speaker-aware reply representation, is the vector representation of the reply, and this vector representation is related to the target preceding text information; and $W_{10}$, $W_{11}$, $W_{12}$, $W_{13}$ are model parameters.

Then, the consistency information $\hat{H}^{s\_i}$ between the candidate reply information $r_i$ and the target preceding text information may be determined:

$$E^{s\_i}=\text{MaxPolling}(H^{s\_i})$$

$$E^{i\_s}= \text{MaxPolling} (H^{i\_s})$$

$$g^{si} = \sigma(E^{s\_i}W_{14} + E^{i\_s}W_{15} + b_5)$$

$$\widehat{H}^{s\_i} = g^{si}\odot E^{s\_i} + (1 - g^{si})\odot E^{i\_s}$$

where, $W_{14}$, $W_{15}$, $b_5$, $b_6$ are model parameters; and $g^{si}$ denotes a gate mechanism value obtained by fusing $H^{s\_i}$ and $H^{i\_s}$ based on the gate mechanism.

In the fifth step, first, data of the three, i.e., the total vector $h_i^{[CLS]}$ of the semantics of the whole preceding text information, the consistency information $\hat{H}^{h\_i}$ between the candidate reply information $r_i$ and the whole preceding text information, and the consistency information $\hat{H}^{s\_i}$ between the candidate reply information $r_i$ and the target preceding text information, are spliced to obtain inference information $H^i$ of the candidate reply information $r_i$:

$$H^{\mathrm{i}} = [h_i^{[CLS]}; \hat{H}^{h_i}; \hat{H}^{s\_i}]$$

Secondly, based on the inference information, the score $P(r_i|U, R)$ of the candidate reply information $r_i$ is predicted:

$$P(r_i|U, R) = \frac{\exp\left(W_{16}H^i + b_6\right)}{\sum_{j=0}^{M} \exp\left(W_{16}H^j + b_6\right)}$$

where, $W_{16}$ and $b_6$ are model parameters, set M is an identifier of the candidate reply information in the plurality pieces of candidate reply information other than the candidate reply information $r_i$; and R denotes a set of the candidate reply information.

In this application scenario, the above model parameters may be obtained based on model training, and a system for training the model may be shown in FIG. 5, and steps of training the model include: acquiring sample dialogue data, where the sample dialogue data includes dialogue history and candidate replies, filtering the sample dialogue data to exclude incomplete data and redundant data to obtain training data; inputting the training data into a knowledge transfer predictor to obtain word vectors of each piece of training data, inputting the training data processed by the knowledge transfer predictor into a knowledge-aware generator to obtain knowledge-aware information (such as the first consistency information, the second consistency information), and determining the target reply information based on the knowledge-aware information. A loss function of the model may be defined as:

$$J(\theta) = -\frac{1}{N}\sum logP(\hat{r}_i|U, R) + \lambda\|\theta\|_2^2$$

where, $\lambda$ is a hyperparameter, $\theta$ is all trainable parameters, N is a size of the training data in the dataset, and $\hat{r}_i$ is the actual reply information. The model is optimized based on the loss function, and when a loss value of the loss function meets a preset threshold, it may be determined that the training of the model is complete, and the model parameters may be obtained based on the trained model.

In this application scenario, the structure of the system for determining target reply information may include:

Preceding text encoding module: given the whole preceding text information and the current candidate reply information, the BERT model is used to encode the input information to obtain word-level word vector representations of the given whole preceding text information and the current candidate reply information, and to obtain a semantic representation of the whole preceding text information and a semantic representation of the candidate reply information.

Fine-grained comparison module: given the word vectors of the whole preceding text information and the candidate reply information, the total difference information between the current candidate reply information and other candidate reply information may be obtained by calculating the similarity matrix between the current candidate reply information and the other candidate replay information. Then, a biphasic matching mechanism (i.e., the process of obtaining $H^{h\_i}$ and $H^{i\_h}$) is applied to compare the word vectors of the whole preceding text information with the total difference information in both positive and negative directions (i.e., the two directions of calculating a reply-relative preceding text representation and a preceding-text-relative reply representation) respectively, to obtain the reply-aware preceding text representation and the preceding-text-aware reply representation, and then the representations are combined via the gate mechanism, to obtain the first consistency information between the whole preceding text information and the current candidate reply information.

Another biphasic matching mechanism (i.e., the process of obtaining $H^{s\_i}$ and $H^{i\_s}$) is applied to compare the word vectors of the speaker's preceding text with the total difference information to obtain the reply-aware speaker's preceding text representation and the speaker-aware reply representation, and then the two representations are combined via the gate mechanism, to obtain the second consistency information between the speaker's preceding text and the current candidate reply information.

Prediction module: given the semantic representation of the whole preceding text information and the semantic representation of the current candidate reply information, the first consistency information between the whole preceding text information and the candidate reply information, and the second consistency information between the speaker's whole preceding text information (i.e., target preceding text information) and the current candidate reply information, the three may be spliced and then input into a softmax network to obtain a final score of the candidate reply. A training objective of the model is to maximize a probability value of correct replies.

An example of the method for determining information in this application scenario is: Dialogue history information is "A: It's already 6:30, shall we start preparing dinner now? B: But I don't want to cook, I'm too tired to cook every day. A: Why don't we go out for eating? There is a new Chinese restaurant on Third Avenue. Xiaoming went there yesterday and said it was very good. B: Really? What types of food do they have? You know, I can't eat spicy food. A: Don't worry, the chef is Cantonese. I know that Cantonese food is one of your favorite dishes. B: That's great, do you know how to get there? A: I don't know where it is, I just know it's on Third Avenue. Don't worry, I think we can find it. B: But I don't want to walk, it's too hot outside. A: Well, why not have Xiaoming pick us up and we can treat him for dinner. B: Good idea".

The candidate reply information includes the following options: "1) Since Sichuan food is your favorite dish, why don't we go over there after work? 2) Okay, I know where the restaurant is. 3) Okay, let's go! 4) Okay, we can go eat your favorite Sichuan food after school."

Taking option 1) as an example, the whole preceding text information is spliced with option 1), and the BERT model is used to obtain the vector representation of each word, and obtain a same-dimension vector representation of the whole semantic information.

Comparing between Option 1) and Option 2) and the difference is [Sichuan food is your favorite dish, we go over there after work]; the difference between Option 1) and Option 3) is [Sichuan food is your favorite dish]; and the difference between Option 1) and Option 4) is [go there after work, after school]. The difference contents [Sichuan food is your favorite dish, we go over there after work] are then integrated to obtain the total difference information between option 1) and all the other options. The total difference information is matched with the whole preceding text information, and it was found that Sichuan food and Cantonese food do not match, and there is no word regarding after work in the text, so option 1) would have a relatively low score (i.e., degree of consistency contained in the first consistency information is poor) in terms of whole preceding text consistency. Finally, the difference content is matched with Speaker A's historical preceding text, and it was found that Speaker A had said something about the other person favorites Cantonese food, it would therefore enhance the comparison of this type of information with the difference content, which found that Sichuan food and Cantonese food do not match. Therefore, the speaker's preceding text consistency score of option 1) is also relatively low (i.e., degree of consistency contained in the second consistency information is poor).

As above, the difference content between option 2) and option 1), 3), and 4) is compared and a match score is calculated, since "I know where the restaurant is" contradicts the original text in which A said "I don't know where it is but I believe we can find it", the match score is low (degree of consistency between the semantics of the option and the semantics of the whole preceding text is poor). Option 3) is compared with option 1), 2), 4), since there is no contradictory information, the score is relatively high. Option 4) is compared with option 1), 2), 3) and the match score is calculated, since "favorite Sichuan food" contradicts the original text in which A said "your favorite Cantonese food", the match score is low. Finally, the scores of the four options may be ranked, and then option 3) is determined as the target reply information.

With further reference to FIG. 6, as an implementation of the method shown in the above figures, an embodiment of the present disclosure provides an apparatus for determining information, and the apparatus embodiment corresponds to the method embodiments shown in FIG. 2 and FIG. 3. The apparatus may be applied to various electronic devices.

As shown in FIG. 6, the apparatus for determining information in the present embodiment, including: an acquisition unit 601, a first determining unit 602, a second determining unit 603, and a third determining unit 604. The acquisition unit is configured to acquire whole preceding text information and a plurality pieces of candidate reply information for replying to the whole preceding text information. The first determining unit is configured to determine, for each piece of candidate reply information in the plurality pieces of candidate reply information, total difference information between the piece of candidate reply information and other candidate reply information in the plurality pieces of candidate reply information other than the piece of candidate reply information. The second determining unit is configured to determine consistency information between the total difference information and the whole preceding text information as first consistency information between the piece of candidate reply information and the whole preceding text information. The third determining unit is configured to determine target reply information from the plurality pieces of candidate reply information, based on the first consistency information corresponding to each piece of candidate reply information.

In some embodiments, the first determining unit includes: a first acquisition module, configured to acquire word vectors of each piece of candidate reply information; a first determining module, configured to determine, for each piece of candidate reply information, based on a similarity between the word vectors of the piece of candidate reply information and the word vectors of each piece of the other candidate reply information, difference information between the piece of candidate reply information and each piece of the other candidate reply information; and a second determining module, configured to determine the difference information between the piece candidate reply information and all of the other candidate reply information as the total difference information between the piece of candidate reply information and the other candidate reply information.

In some embodiments, the second determining unit includes: a second acquisition module, configured to acquire word vectors of the whole preceding text information; and a third determining module, configured to determine consistency information between the total difference information and the word vectors of the whole preceding text information as the first consistency information between the piece of candidate reply information and the whole preceding text information.

In some embodiments, the apparatus further includes: a fourth determining unit, configured to determine consistency information between the total difference information and target preceding text information as second consistency information between the piece of candidate reply information and the target preceding text information, where the target preceding text information is information in the whole preceding text information that belongs to a same interlocutor as the piece of candidate reply information; and the third determining unit includes: a fourth determining module, configured to determine the target reply information from the plurality pieces of candidate reply information, based on the first consistency information and the second consistency information corresponding to each piece of candidate reply information.

In some embodiments, the total difference information is determined based on the similarity between the word vectors of the piece of candidate reply information and the word vectors of the other candidate reply information in the plurality pieces of candidate reply information other than the piece of candidate reply information, and the fourth determining unit includes: a third acquisition module, configured to acquire word vectors of the target preceding text information; and a fifth determining module, configured to determine consistency information between the total difference information and the word vectors of the target preceding text information as the second consistency information between the piece of candidate reply information and the target preceding text information.

In some embodiments, the fourth determining module includes: a scoring module, configured to determine, for each piece of candidate reply information, a score of the piece of candidate reply information, on basis of the first consistency information corresponding to the piece of candidate reply information, the second consistency information corresponding to the piece of candidate reply information, and third consistency information between semantics of the piece of candidate reply information and semantics of the whole preceding text information; and a selection module, configured to determine the target reply information from the plurality pieces of candidate reply information, based on the score of each piece of candidate reply information.

The units in the apparatus 600 described above correspond to the steps in the method described with reference to FIG. 2 and FIG. 3. The operations, features and technical effects achieved by the method for determining information described above are thus equally applicable to the apparatus 600 and the units contained therein, and detailed description thereof will be omitted.

According to an embodiment of the present disclosure, an electronic device and a readable storage medium are provided.

As shown in FIG. 7, is a block diagram of an electronic device of the method for determining information according to embodiments of the present disclosure. The electronic device is intended to represent various forms of digital computers such as a laptop computer, a desktop computer, a workstation, a personal digital assistant, a server, a blade server, a mainframe computer, and other appropriate computers. The electronic device may alternatively represent various forms of mobile apparatuses such as personal digital assistant, a cellular telephone, a smart phone, a wearable device and other similar computing apparatuses. The parts shown herein, their connections and relationships, and their functions are only as examples, and not intended to limit implementations of the present disclosure as described and/or claimed herein.

As shown in FIG. 7, the electronic device includes: one or more processors 701, a memory 702, and interfaces for connecting various components, including high-speed interfaces and low-speed interfaces. The various components are connected to each other using different buses, and may be installed on a common motherboard or in other methods as needed. The processor may process instructions executed within the electronic device, including instructions stored in or on the memory to display graphic information of GUI on an external input/output apparatus (such as a display device coupled to the interface). In other embodiments, a plurality of processors and/or a plurality of buses may be used together with a plurality of memories if desired. Similarly, a plurality of electronic devices may be connected, and the devices provide some necessary operations (for example, as a server array, a set of blade servers, or a multi-processor system). In FIG. 7, one processor 701 is used as an example.

The memory 702 is a non-transitory computer readable storage medium provided by an embodiment of the present disclosure. The memory stores instructions executable by at least one processor, so that the at least one processor performs the method for determining information provided by embodiments of the present disclosure. The non-transitory computer readable storage medium of the present disclosure stores computer instructions for causing a computer to perform the method for determining information provided by embodiments of the present disclosure.

The memory 702, as a non-transitory computer readable storage medium, may be used to store non-transitory software programs, non-transitory computer executable programs and modules, such as program instructions/modules (for example, the acquisition unit 601, the first determining unit 602, the second determining unit 603, and the third determining unit 604 shown in FIG. 6) corresponding to the method for determining information in embodiments of the present disclosure. The processor 701 executes the non-transitory software programs, instructions, and modules stored in the memory 702 to execute various functional applications and data processing of the server, that is, to implement the method for determining information in the foregoing method embodiments.

The memory 702 may include a storage program area and a storage data area, where the storage program area may store an operating system and at least one function required application program; and the storage data area may store data created by the use of the electronic device according to the method for processing parking, etc. In addition, the memory 702 may include a high-speed random access memory, and may also include a non-transitory memory, such as at least one magnetic disk storage device, a flash memory device, or other non-transitory solid-state storage devices. In some embodiments, the memory 702 may optionally include memories remotely provided with respect to the processor 701, and these remote memories may be connected to the electronic device for extracting video clip. Examples of the above network include but are not limited to the Internet, intranet, local area network, mobile communication network, and combinations thereof.

The electronic device of the method for determining information may further include: an input apparatus 703 and an output apparatus 704. The processor 701, the memory 702, the input apparatus 703, and the output apparatus 704 may be connected through a bus or in other methods. In Fig. 7, connection through a bus is used as an example.

The input apparatus 703 may receive input digital or character information, and generate key signal inputs related to user settings and function control of the electronic device of the method for processing parking, such as touch screen, keypad, mouse, trackpad, touchpad, pointing stick, one or more mouse buttons, trackball, joystick and other input apparatuses. The output apparatus 704 may include a display device, an auxiliary lighting apparatus (for example, LED), a tactile feedback apparatus (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, dedicated ASICs (application specific integrated circuits), computer hardware, firmware, software, and/or combinations thereof. These various embodiments may include: being implemented in one or more computer programs that can be executed and/or interpreted on a programmable system that includes at least one programmable processor. The programmable processor may be a dedicated or general-purpose programmable processor, and may receive data and instructions from a storage system, at least one input apparatus, and at least one output apparatus, and transmit the data and instructions to the storage system, the at least one input apparatus, and the at least one output apparatus.

These computing programs (also referred to as programs, software, software applications, or codes) include machine instructions of the programmable processor and may use high-level processes and/or object-oriented programming languages, and/or assembly/machine languages to implement these computing programs. As used herein, the terms "machine readable medium" and "computer readable medium" refer to any computer program product, device, and/or apparatus (for example, magnetic disk, optical disk, memory, programmable logic apparatus (PLD)) used to provide machine instructions and/or data to the programmable processor, including machine readable medium that receives machine instructions as machine readable signals. The term "machine readable signal" refers to any signal used to provide machine instructions and/or data to the programmable processor.

In order to provide interaction with a user, the systems and technologies described herein may be implemented on a computer, the computer has: a display apparatus for displaying information to the user (for example, CRT (cathode ray tube) or LCD (liquid crystal display) monitor); and a keyboard and a pointing apparatus (for example, mouse or trackball), and the user may use the keyboard and the pointing apparatus to provide input to the computer. Other types of apparatuses may also be used to provide interaction with the user; for example, feedback provided to the user may be any form of sensory feedback (for example, visual feedback, auditory feedback, or tactile feedback); and any form (including acoustic input, voice input, or tactile input) may be used to receive input from the user.

The systems and technologies described herein may be implemented in a computing system that includes backend components (e.g., as a data server), or a computing system that includes middleware components (e.g., application server), or a computing system that includes frontend components (for example, a user computer having a graphical user interface or a web browser, through which the user may interact with the implementations of the systems and the technologies described herein), or a computing system that includes any combination of such backend components, middleware components, or frontend components. The components of the system may be interconnected by any form or medium of digital data communication (e.g., communication network). Examples of the communication network include: local area networks (LAN), wide area networks (WAN), the Internet, and blockchain networks.

The computer system may include a client and a server. The client and the server are generally far from each other and usually interact through the communication network. The relationship between the client and the server is generated by computer programs that run on the corresponding computer and have a client-server relationship with each other.

It should be understood that the various forms of processes shown above may be used to reorder, add, or delete steps. For example, the steps described in embodiments of the present disclosure may be performed in parallel, sequentially, or in different orders. As long as the desired results of the technical solution disclosed in embodiments of the present disclosure can be achieved, no limitation is made herein.

The above specific embodiments do not constitute limitation on the protection scope of the present disclosure. Those skilled in the art should understand that various modifications, combinations, sub-combinations and substitutions may be made according to design requirements and other factors. Any modification, equivalent replacement and improvement made within the spirit and principle of the present disclosure shall be included in the protection scope of the present disclosure.

**Claims**

1.  A method for determining information, the method comprising:

    acquiring whole preceding text information and a plurality pieces of candidate reply information for replying to the whole preceding text information;
    determining, for each piece of candidate reply information in the plurality pieces of candidate reply information, total difference information between the piece of candidate reply information and other candidate reply information in the plurality pieces of candidate reply information other than the piece of candidate reply information;
    determining consistency information between the total difference information and the whole preceding text information as first consistency information between the piece of candidate reply information and the whole preceding text information; and
    determining target reply information from the plurality pieces of candidate reply information, based on first consistency information corresponding to each piece of candidate reply information.

2.  The method according to claim 1, wherein the determining, for each piece of candidate reply information in the plurality pieces of candidate reply information, the total difference information between the piece of candidate reply information and other candidate reply information in the plurality pieces of candidate reply information other than the piece of candidate reply information, comprises:

    acquiring word vectors of each piece of candidate reply information;
    for each piece of candidate reply information, determining, based on a similarity between word vectors of the piece of candidate reply information and word vectors of each piece of the other candidate reply information, difference information between the piece of candidate reply information and each piece of the other candidate reply information; and
    determining difference information between the piece of candidate reply information and all of the other candidate reply information as the total difference information between the piece of candidate reply information and the other candidate reply information.

3.  The method according to claim 2, wherein the determining the consistency information between the total difference information and the whole preceding text information as the first consistency information between the piece of candidate reply information and the whole preceding text information, comprises:

    acquiring word vectors of the whole preceding text information; and
    determining consistency information between the total difference information and the word vectors of the whole preceding text information as the first consistency information between the piece of candidate reply information and the whole preceding text information.

4.  The method according to claim 1, wherein the method further comprises:

    determining consistency information between the total difference information and target preceding text information as second consistency information between the piece of candidate reply information and the target preceding text information, wherein the target preceding text information is information in the whole preceding text information that belongs to a same interlocutor as the piece of candidate reply information; and
    the determining the target reply information from the plurality pieces of candidate reply information, based on the first consistency information corresponding to each piece of candidate reply information, comprises:
    determining the target reply information from the plurality pieces of candidate reply information, based on the first consistency information and the second consistency information corresponding to each piece of candidate reply information.

5. The method according to claim 4, wherein the total difference information is determined based on a similarity between word vectors of the piece of candidate reply information and word vectors of the other candidate reply information of the plurality pieces of candidate reply information other than the piece of candidate reply information; the determining the consistency information between the total difference information and the target preceding text information as the second consistency information between the piece of candidate reply information and the target preceding text information, comprises:

acquiring word vectors of the target preceding text information; and determining consistency information between the total difference information and the word vectors of the target preceding text information as the second consistency information between the piece of candidate reply information and the target preceding text information.

6. The method according to claim 4, wherein the determining the target reply information from the plurality pieces of candidate reply information, based on the first consistency information and the second consistency information corresponding to each piece of candidate reply information, comprises:

for each piece of candidate reply information, determining a score of the piece of candidate reply information, on basis of the first consistency information corresponding to the piece of candidate reply information, the second consistency information corresponding to the piece of candidate reply information, and third consistency information between semantics of the piece of candidate reply information and semantics of the whole preceding text information; and determining the target reply information from the plurality pieces of candidate reply information, based on a score of each piece of candidate reply information.

7. An apparatus for determining information, the apparatus comprising:

an acquisition unit, configured to acquire whole preceding text information and a plurality pieces of candidate reply information for replying to the whole preceding text information; a first determining unit, configured to determine, for each piece of candidate reply information in the plurality pieces of candidate reply information, total difference information between the piece of candidate reply information and other candidate reply information in the plurality pieces of candidate reply information other than the piece of candidate reply information; a second determining unit, configured to determine consistency information between the total difference information and the whole preceding text information as first consistency information between the piece of candidate reply information and the whole preceding text information; and a third determining unit, configured to determine target reply information from the plurality pieces of candidate reply information, based on first consistency information corresponding to each piece of candidate reply information.

8. The apparatus according to claim 7, wherein the first determining unit comprises:

a first acquisition module, configured to acquire word vectors of each piece of candidate reply information; a first determining module, configured to determine, for each piece of candidate reply information, based on a similarity between word vectors of the piece of candidate reply information and word vectors of each piece of the other candidate reply information, difference information between the piece of candidate reply information and each piece of the other candidate reply information; and a second determining module, configured to determine difference information between the piece of candidate reply information and all of the other candidate reply information as the total difference information between the piece of candidate reply information and the other candidate reply information.

9. The apparatus according to claim 7, wherein the second determining unit comprises:

a second acquisition module, configured to acquire word vectors of the whole preceding text information; and a third determining module, configured to determine consistency information between the total difference information and the word vectors of the whole preceding text information as the first consistency information between the piece of candidate reply information and the whole preceding text information.

**10.** The apparatus according to claim 7, wherein the apparatus further comprises:

a fourth determining unit, configured to determine consistency information between the total difference information and target preceding text information as second consistency information between the piece of candidate reply information and the target preceding text information, wherein the target preceding text information is information in the whole preceding text information that belongs to a same interlocutor as the piece of candidate reply information; and
the third determining unit comprises:
a fourth determining module, configured to determine the target reply information from the plurality pieces of candidate reply information, based on the first consistency information and the second consistency information corresponding to each piece of candidate reply information.

**11.** The apparatus according to claim 10, wherein the total difference information is determined based on a similarity between word vectors of the piece of candidate reply information and word vectors of the other candidate reply information of the plurality pieces of candidate reply information other than the piece of candidate reply information, and the fourth determining unit comprises:

a third acquisition module, configured to acquire word vectors of the target preceding text information; and
a fifth determining module, configured to determine consistency information between the total difference information and the word vectors of the target preceding text information as the second consistency information between the piece of candidate reply information and the target preceding text information.

**12.** The apparatus according to claim 10, wherein the fourth determining module comprises:

a scoring module, configured to determine, for each piece of candidate reply information, a score of the piece of candidate reply information, on basis of the first consistency information corresponding to the piece of candidate reply information, the second consistency information corresponding to the piece of candidate reply information, and third consistency information between semantics of the piece of candidate reply information and semantics of the whole preceding text information; and
a selection module, configured to determine the target reply information from the plurality pieces of candidate reply information, based on a score of each piece of candidate reply information.

**13.** An electronic device, comprising:

at least one processor; and
a memory, in communication with the at least one processor;
wherein, the memory stores instructions executable by the at least one processor, the instructions being executed by the at least one processor to enable the at least one processor to perform the method according to any one of claims 1-6.

**14.** A non-transitory computer readable storage medium, storing a computer instruction thereon, wherein the computer instruction is used to cause the computer to perform the method according to any one of claims 1-6.

**15.** A computer program product, comprising a computer program, the computer program, when executed by a processor, implements the method according to any one of claims 1-6.

100

103

102

104

105

101

FIG. 1

<u>200</u>

201
Acquire whole preceding text information and a plurality pieces of candidate reply information for replying to the whole preceding text information

202
Determine, for each piece of candidate reply information in the plurality pieces of candidate reply information, total difference information between the piece of candidate reply information and other candidate reply information in the plurality pieces of candidate reply information other than the piece of candidate reply information

203
Determine consistency information between the total difference information and the whole preceding text information as first consistency information between the piece of candidate reply information and the whole preceding text information

204
Determine target reply information from the plurality pieces of candidate reply information, based on the first consistency information corresponding to each piece of candidate reply information

FIG. 2

<u>300</u>

301

Acquire whole preceding text information and a plurality pieces of candidate reply information for replying to the whole preceding text information

302

Determine, for each piece of candidate reply information in the plurality pieces of candidate reply information, total difference information between the piece of candidate reply information and other candidate reply information in the plurality pieces of candidate reply information other than the piece of candidate reply information

303

Determine consistency information between the total difference information and the whole preceding text information as first consistency information between the piece of candidate reply information and the whole preceding text information

304

Determine consistency information between the total difference information and target preceding text information as second consistency information between the piece of candidate reply information and the target preceding text information

305

Determine the target reply information from the plurality pieces of candidate reply information, based on the first consistency information corresponding to each piece of candidate reply information and the second consistency information

FIG. 3

FIG. 4

```
┌─────────────────────────────────────┐     ┌─────────────────────────────────────┐
│  ┌───────────────────────────────┐  │     │  ┌───────────────────────────────┐  │
│  │ Acquire sample dialogue data  │  │     │  │ Knowledge transfer predictor  │  │
│  └───────────────────────────────┘  │     │  └───────────────────────────────┘  │
│                 │                    │     │                 │                    │
│                 ▼                    │     │                 ▼                    │
│  ┌───────────────────────────────┐  │     │  ┌───────────────────────────────┐  │
│  │ Process sample dialogue data  │  │ Training  │  │  Knowledge-aware generator    │  │
│  └───────────────────────────────┘  │  ╱  │  └───────────────────────────────┘  │
│                 │                    │ ╱   │                 │                    │
│                 ▼                    │╱    │                 ▼                    │
│  ┌───────────────────────────────┐  │ Training  │  ┌───────────────────────────────┐  │
│  │      Obtain training data     │──┼────────►│  │   Determine target reply      │  │
│  └───────────────────────────────┘  │     │  │         information            │  │
│                                      │     │  └───────────────────────────────┘  │
│      Data processing apparatus       │     │      Reply Generation apparatus      │
└─────────────────────────────────────┘     └─────────────────────────────────────┘
```

FIG. 5

600

```
┌─────────────────────────────────────────┐
│                                          │
│   ┌─────────────────────────┐  ⌐ 601     │
│   │    Acquisition unit     │            │
│   └─────────────────────────┘            │
│                 │                        │
│                 ▼                        │
│   ┌─────────────────────────┐  ⌐ 602     │
│   │   First determining unit │            │
│   └─────────────────────────┘            │
│                 │                        │
│                 ▼                        │
│   ┌─────────────────────────┐  ⌐ 603     │
│   │  Second determining unit │            │
│   └─────────────────────────┘            │
│                 │                        │
│                 ▼                        │
│   ┌─────────────────────────┐  ⌐ 604     │
│   │   Third determining unit │            │
│   └─────────────────────────┘            │
│                                          │
└─────────────────────────────────────────┘
```

FIG. 6

700

FIG. 7

## INTERNATIONAL SEARCH REPORT

| International application No. |
| --- |
| **PCT/CN2023/073922** |

**A. CLASSIFICATION OF SUBJECT MATTER**

G06F16/33(2019.01)i;G06F9/451(2018.01)i;G06F16/332(2019.01)i;G06F 40/30(2020.01)i

According to International Patent Classification (IPC) or to both national classification and IPC

**B. FIELDS SEARCHED**

Minimum documentation searched (classification system followed by classification symbols)

G06F16/-; G06F9/-; G06F40/-

Documentation searched other than minimum documentation to the extent that such documents are included in the fields searched

Electronic data base consulted during the international search (name of data base and, where practicable, search terms used)

CNABS, CNTXT, CNKI: 问答, 会话, 对话, 上文, 提问, 回答, 答案, 回复, 答复, 差异, 差别, 不同, 比较, 对比, 其他, 其它, 多个, 数个, 两个, 相似, 相同, 向量, VEN, USTXT, EPTXT, IEEE: conversation, dialogue, query, answer, reply, differen+, compar+, contrast, other, several, similarity, vector

**C. DOCUMENTS CONSIDERED TO BE RELEVANT**

| Category* | Citation of document, with indication, where appropriate, of the relevant passages | Relevant to claim No. |
| --- | --- | --- |
| PX | CN 114547244 A (BEIJING WODONG TIANJUN INFORMATION TECHNOLOGY CO., LTD. et al.) 27 May 2022 (2022-05-27) claims 1-14 | 1-15 |
| A | CN 113392321 A (BEIJING SANKUAI ONLINE TECHNOLOGY CO., LTD.) 14 September 2021 (2021-09-14) description, paragraphs [0005]-[0112] | 1-15 |
| A | CN 108875074 A (BEIJING HUIWEN TECHNOLOGY DEVELOPMENT CO., LTD.) 23 November 2018 (2018-11-23) entire document | 1-15 |
| A | CN 113703883 A (TENCENT TECHNOLOGY (SHENZHEN) CO., LTD.) 26 November 2021 (2021-11-26) entire document | 1-15 |
| A | CN 112948563 A (TIANJIN LUZHI TECHNOLOGY CO., LTD.) 11 June 2021 (2021-06-11) entire document | 1-15 |

☑ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **26 April 2023** | **06 May 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/073922** |

| C. | DOCUMENTS CONSIDERED TO BE RELEVANT | |
| --- | --- | --- |
| Category* | Citation of document, with indication, where appropriate, of the relevant passages | Relevant to claim No. |
| A | US 2010114929 A1 (YAHOO! INC.) 06 May 2010 (2010-05-06)<br>entire document | 1-15 |

Form PCT/ISA/210 (second sheet) (July 2022)

## INTERNATIONAL SEARCH REPORT
### Information on patent family members

International application No.

**PCT/CN2023/073922**

| Patent document cited in search report | | | Publication date (day/month/year) | Patent family member(s) | | | Publication date (day/month/year) |
|---|---|---|---|---|---|---|---|
| CN | 114547244 | A | 27 May 2022 | None | | | |
| CN | 113392321 | A | 14 September 2021 | None | | | |
| CN | 108875074 | A | 23 November 2018 | CN | 108875074 | B | 10 August 2021 |
| CN | 113703883 | A | 26 November 2021 | None | | | |
| CN | 112948563 | A | 11 June 2021 | None | | | |
| US | 2010114929 | A1 | 06 May 2010 | None | | | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210151466